# EUROPÄISCHE PATENTSCHRIFT

(11) **EP 1 664 200 B1**
(45) Veröffentlichungstag und Bekanntmachung des Hinweises auf die Patenterteilung: **28.11.2012**
(21) Anmeldenummer: 04765132.8
(22) Anmeldetag: 13.09.2004
(51) Int. Cl.: C08L 97/02, C08H 8/00

(54) **VERFAHREN ZUR HERSTELLUNG VON ERZEUGNISSEN AUF BASIS VON LIGNOZELLULOSE**
METHOD FOR THE PRODUCTION OF LIGNOCELLULOSE-BASED PRODUCTS
PROCEDE POUR FABRIQUER DES PRODUITS A BASE DE LIGNOCELLULOSE

(30) Priorität: 13.09.2003 DE 10342347
(43) Veröffentlichungstag der Anmeldung: 07.06.2006
(73) Patentinhaber: Fritz Egger GmbH & Co. OG, 3105 Unterradlberg (AT)
(72) Erfinder: SREBOTNIK, Ewald, A-1220 Wien (AT); KUNCINGER, Thomas, A-1230 Wien (AT); STEINWENDER, Martin, A-2380 Perchtoldsdorf (AT)
(74) Vertreter: Cohausz & Florack
(86) Internationale Anmeldenummer: PCT/EP2004/010210
(87) Internationale Veröffentlichungsnummer: WO 2005/028561

(56) Entgegenhaltungen:
- WO-A-98/16357
- WO-A-99/36465
- LUND MARTIN ET AL: "Modification of kraft pulp and lignin by copolymerization of phenolic compounds initiated by laccase" PROCEEDINGS OF THE INTERNATIONAL CONFERENCE ON BIOTECHNOLOGY IN THE PULP AND PAPER INDUSTRY, Bd. 3, 1998, Seiten C139-C142, XP009039274 MONTREAL, CAN

## Beschreibung

Die Erfindung betrifft ein Verfahren zur Herstellung von Erzeugnissen auf Basis von Lignozellulose durch Modifizierung von lignozellulosem Material (z.B. Holz). Gegenstand der Erfindung sind ferner Erzeugnisse, die nach diesem Verfahren hergestellt werden, z.B. Verbundwerkstoffe.

Aus dem Stand der Technik sind verschiedene Verfahren zur enzymatischen Modifikation von lignozellulosem Material bekannt. So offenbart die EP 0772 717 B1 ein Verfahren zur Behandlung von lignozellulosem Material und eines phenolischen Polysaccharids mit einem Enzym, das dazu in der Lage ist, die Oxidation der Phenolgruppen in Gegenwart eines Oxidationsmittel zu katalysieren. Das phenolische Polysaccharid weist Substituenten auf, die phenolische Hydroxylgruppen enthalten. Dabei wird das phenolische Polysaccharid dem lignozellulosem Material zugemischt und bildet nicht etwa einen originären Bestandteil des lignozellulosen Materials. In dieser Druckschrift wird also ein Verfahren zur enzymatischen Ankopplung von Zusatzstoffen (vorzugsweise Phenole jeglicher Art) beschrieben, wobei die Zusatzstoffe für sich als Bindemittel fungieren. Der Zusatzstoff ersetzt also konventionelle Bindemittel wie z.B. Aminoplaste, Phenoplaste, Isocyanate, Polyvinylacetate, Epoxidharze oder Acrylharze.

Die DE 36 21 218 A1 beschreibt ein Verfahren zur Herstellung eines Bindemittels für holz- oder cellulosehaltige Stoffe unter Verwendung von Ligninverbindungen, wobei die Ligninverbindungen mit Exopolysacchariden gemischt werden. Die Gewinnung der Exopolysaccharide erfolgt in einem eigenen Verfahrensschritt durch Mikroorganismen in geeigneten Nährmedien (Kulturflüssigkeiten). Hier handelt es sich um ein durch enzymatische Reaktionen hergestelltes Bindemittel, das dann den holz- oder cellulosehaltigen Stoffen (Substrat) zugemischt wird. Eine enzymatische und/oder chemische Reaktion zwischen dem Substrat und dem Bindemittel wird in dieser Druckschrift nicht beschrieben.

Die DE 43 31 878 A1 sowie die WO 99/31155 beschreiben Verfahren zur Herstellung von Polymeren, die Lignin und organische Verbindungen enthalten, sowie nach den Verfahren hergestellte Polymerisate, wobei die organischen Verbindungen zumindest 3 Kohlenstoffatome aufweisen. Das als Åusgangsmaterial verwendete Lignin kann natürliches Pflanzenlignin sein, beispielsweise aus Holz gewonnen, insbesondere aber Sulfitlignin oder Alkalilignin (Kraftlignin), wie es beim chemischen Holzaufschluss für.die industrielle Zelluloseherstellung in großen Mengen anfällt. Als radikalisch oxidierende Enzyme können Peroxidasen (z.B. Mangan-Peroxidase) und Phenoloxidasen (z.B. Laccase, Thyrosinase) verwendet werden, die gemeinsam mit Oxidationsmitteln wie Wasserstoffperoxid oder Sauerstoff die Polymerisation bewirken. In der WO 99/31155 werden zahlreiche Anwendungen für das erhaltene Polymerisat genannt, unter anderem die Verwendung solcher Polymerisate zum Abbinden von Holzwerkstoffen. Eine enzymatische und/oder chemische Reaktion zwischen Holzwerkstoff und Polymerisat (Bindemittel) werden in diesen Druckschriften nicht offenbart.

Die WO 99/36465 A beschreibt ein Verfahren zur Erhöhung der Festigkeit eines Erzeugnisses auf Zellulosebasis. Das Verfahren umfasst die Zugabe von a) einem wasserlöslichen, nukleophilen, polymeren Materials, b) einer phenolischen Verbindung und c) einer oxidierenden Verbindung zu einem Lignozellulose enthaltenden Material, wie beispielsweise Holz.

"LUND MARTIN EL AL: "Modification of kraft, pulp and lignin by copolymerization of phenolic compounds initiated by laccase" beschreibt die Herstellung eines Copolymers eines phenolischen Monomers und Lignin über enzymatische Oxidation beider Komponenten unter Bildung von Phenoxyradikalen, welcher unter Ausbildung einer kovalenten Bindung miteinander kombinieren. Als mögliche phenolische Verbindung wird Vanilylamin genannt.

Ein Verfahren zur Herstellung von modifiziertem Lignin durch eine enzymatische Kopplung von Phenolen an Lignin wird in der US 6 187 136 B1 beschrieben. Wesentlich an dem beschriebenen Verfahren ist, dass die Phenole positiv oder negativ geladene funktionelle Gruppen tragen, wodurch eine ionische Wechselwirkung entgegengesetzt geladener funktioneller Gruppen stattfindet. Es wird also keine kovalente Bindung zwischen enzymatisch aufgebrachtem Zusatzstoff und dem Bindemittel angestrebt. Das beschriebene Verfahren ermöglicht die Verbesserung der Bindeeigenschaften im Zuge der Papierherstellung beim Einsatz eines geladenen Bindemittels wie beispielsweise kationischer Stärke und negativ geladener Lignozellulose. Nachteilig an dem Verfahren ist insbesondere, dass herkömmliche Bindemittel, wie sie beispielsweise für die Herstellung von Holzwerkstoffen eingesetzt werden, nicht verwendbar sind.

Eine Aufgabe der vorliegenden Erfindung besteht darin, ein Verfahren zur Herstellung von Erzeugnissen auf Basis von Lignozellulose durch Modifikation von lignozellulosehaltigem Material zur Verfügung zu stellen, in welchem die Nachteile der aus dem Stand der Technik bekannten Verfahren vermieden werden. Insbesondere soll das Verfahren die Herstellung von Holzverbundwerkstoffen mit reduziertem Bindemittelgehalt und mit verbesserten physikalisch-chemischen Eigenschaften ermöglichen.

Diese Aufgabe gelöst durch ein Verfahren zur Herstellung eines auf Lignocellulose basierenden Erzeugnisses, ausgewählt aus der Gruppe bestehend aus Holzverbundstoffen Holzfaserplatten, Spanplatten, Holzspanplatten, Sperrholz, Oriented Strand Board (OSB) und geformten Verbundwerkstoffen,
aus mindestens
(a) einem lignocellulose-haltigem Material,
(b) einem Bindemittel auf Harzbasis, ausgewählt aus der Gruppe bestehend aus Aminoplasten, Phenoplasten, Vinylacetaten, Isocyanaten, Epoxidharzen und/oder Acrylharzen und
(c) einer organischen Verbindung, welche mindestens eine erste und eine zweite funktionelle Gruppe aufweist,
   (c1 wobei die erste funktionelle Gruppe eine oxidierbare funktionelle Gruppe ausgewählt aus der Gruppe bestehend aus Hydroxyl-, Hydroxylamino-, Carbonyl-, Amin-, Imin-, Amid-, Nitril-, Isonitril-, Azo-, Alken- oder Alkingruppen ist und
   (c2) wobei die zweite funktionelle Gruppe eine Gruppe ist, welche geeignet ist, unter Ausbildung einer kovalenten Bindung mit dem Bindemittel zu reagieren, und ausgewählt aus der Gruppe bestehend aus Hydroxyl-, Carbonyl-, Carboxyl-, Amin-, Imin-, Amid-, Ureid-, N-substituierten Ureid-, Harnstoff-, N-substituierten Harnstoff-, Urethan-, N-substituierten Urethan-, Nitril-, Isonitril-, Azo-, Alken- oder Alkingruppen ist,
wobei das Verfahren umfasst:
- Behandeln des lignocellulose-haltigen Materials mit der organischen Verbindung in Gegenwart eines Oxidationsmittels, ausgewählt aus der Gruppe bestehend aus Sauerstoff und/oder Wasserstoffperoxid in Gegenwart eines oxidativen Enzyms als Katalysator, in einem wässrigen und/oder organischen Lösungsmittel als Medium wobei das Medium eine Temperatur von 10 bis 120 °C und/oder einen pH von 2 bis 10 aufweist und wobei die erste funktionelle Gruppe der organischen Verbindung oxidiert wird, wodurch zumindest ein Oxidationsprodukt der organischen Verbindung entsteht, das mit dem lignocellulose-haltigen Material eine kovalente Bindung eingeht,
- Behandeln des Reaktionsproduktes aus lignocellulose-haltigem Material und organischer Verbindung mit dem Bindemittel, wobei die Behandlung in einem Medium und unter Reaktionsbedingungen erfolgt, dass die zweite funktionelle Gruppe der organischen Verbindung oder ein im Zuge der Behandlung gebildetes Derivat davon mit dem Bindemittel eine kovalente Bindung eingeht und
- Härten des so hergestellten Verbundmaterials,
wobei als organische Verbindung eine aromatische Verbindung eingesetzt wird, in der die zweite funktionelle Gruppe durch eine aliphatische Seitenkette vom Aromaten abgekoppelt ist.

Vorteilhaft an dem erfindungsgemäßen Verfahren ist, dass herkömmliche Bindemittel, wie sie beispielsweise in der Holzindustrie eingesetzt werden, Verwendung finden können. Das sind beispielsweise Aminoplaste (z.B. Harnstoff-Formaldehyd-Harz, Melamin-Formaldehyd-Harz), Phenoplaste (z.B. Phenol-Formaldehyd-Harz) und Vinylacetat (z.B. PVAc oder Weissleim). Diese Bindemittel bilden im Zuge der Härtungsreaktion keine kovalente Bindung mit dem zu verklebenden lignozellulosen Material aus. Es besteht eine reine physikalische Verankerung des Bindemittels im Material dadurch, dass das Bindemittel in das Material penetriert und durch die Aushärtung eine formschlüssige Kopplung zwischen zwei Materialoberflächen bewirkt.

Ein weiterer Vorteil des erfindungsgemäßen Verfahrens gegenüber bekannten Verfahren besteht in der Erhöhung der Bindekraft zwischen Lignozellulose und Bindemittel aufgrund der Ausbildung von im wesentlichen kovalenten Bindungen. Dieser Vorteil kann genützt werden, um Verbundwerkstoffe mit verbesserten chemisch-physikalischen Eigenschaften herzustellen und/oder unter Beibehaltung von vorgegebenen chemisch-physikalischen Eigenschaften die üblicherweise eingesetzten Bindemittelmengen zu verringern.

Nach dem erfindungsgemäßen Verfahren können folgende Produkte hergestellt werden: Holzverbundwerkstoffe, insbesondere Spanplatten, Faserplatten, Sperrholz, Oriented Strand Board (OSB) sowie geformte Verbundwerkstoffe. Aber auch andere lignozellulose-haltigen Produkte können nach dem beschriebenen Verfahren hergestellt werden. Die nach dem erfindungsgemäßen Verfahren hergestellten Produkte weisen verbesserte physikalische-chemische Eigenschaften auf.

Gemäß einem Aspekt der vorliegenden Erfindung werden als funktionelle organische Verbindungen oxidierbare aromatische Verbindungen, wie z.B. Phenole oder aromatische Amine eingesetzt. Phenole und Amine können durch Oxidationsmittel, wie z.B. Sauerstoff oder Wasserstoffperoxid in Gegenwart eines geeigneten Katalysators leicht oxidiert werden. Als Katalysatoren kommen im erfindungsgemäßen Verfahren oxidative Enzyme, wie z.B. Laccase oder Peroxidasen zum Einsatz, wobei vorzugsweise radikalische Zwischenprodukte entstehen, jedoch sind auch andere reaktive Zwischenprodukte möglich. Wenn die Reaktion in Gegenwart von Lignozellulose erfolgt, können diese radikalischen Zwischenprodukte mit geeigneten, vorzugsweise von Lignin hergeleiteten Strukturen in der Lignozellulose reagieren und daran koppeln, wobei mit dem Begriff "koppeln" die Ausbildung einer kovalenten Bindung zwischen dem Oxidationszwischenprodukt der funktionellen organischen Verbindung und der Lignozellulose verstanden wird. Bei den von Lignin hergeleiteten Strukturen kann es sich um native Ligninstrukturen und/oder um ebenfalls im Zuge der Enzymeinwirkung entstandene Ligninradikale handeln, die mit den Oxidationszwischenprodukten der funktionellen organischen Verbindung koppeln. Obgleich radikalisch Reaktionen bevorzugt sind, kann die Kopplung auch durch andere Mechanismen, wie z.B. Substitution erfolgen, die im Schutzumfang der Erfindung liegen, solange zumindest eine der beteiligten Reaktionskomponenten ein Oxidationsprodukt der ursprünglichen funktionellen organischen Verbindung ist.

Die Erfindung beruht nun auf der Erkenntnis, dass auf Lignozellulose basierende Verbundwerkstoffe, die ein Bindemittel, z.B. Formaldehyd/Harnstoff-Harz enthalten, verbesserte physikalisch-chemische Eigenschaften oder gleiche physikalische-chemische Eigenschaften aufweisen bei einer geringeren Bindemittelmenge.

Unter physikalische-chemischen Eigenschaften werden beispielsweise nachfolgende Eigenschaften verstanden: Dickenquellung bei Einwirkung von Kalt- oder Heißwasser, Biegefestigkeit, Biege-Elastizitätsmodul, Querzugfestigkeit (Zugfestigkeit senkrecht zur Plattenebene bzw. Bindemittelfuge), Zugfestigkeit (parallel zur Plattenebene bzw. Bindemittelfuge), Scherfestigkeit der Bindemittelfuge und Formaldehydgehalt (bei Formaldehydhältigem Bindemittels). Diese.Vorteile werden dann erzielt, wenn das Bindemittel im Zuge der Herstellung des Verbundwerkstoffs im wesentlichen kovalent mit der Lignozellulose vernetzt wird. Im erfindungsgemäßen Verfahren kann dies durch die Verwendung einer oben beschriebenen funktionellen organischen Verbindung erzielt werden, die zusätzliche eine oder mehrere funktionelle Gruppen, z.B. ein vom Aromaten abgekoppeltes Amin umfasst, die zur Ausbildung einer im wesentlichen kovalenten Bindung mit dem Bindemittel fähig sind.

Gemäß einer bevorzugten Ausführungsform der Erfindung umfasst das erfindungsgemäße Verfahren folgende Verfahrensschritte: Oxidieren einer funktionellen organischen Verbindung in Gegenwart von Lignozellulose mit einem oxidationsmittel, so dass die funktionelle organische Verbindung im wesentlichen kovalent an Lignozellulose gekoppelt wird, gefolgt von einer Reaktion der gekoppelten funktionellen organischen Verbindung mit einem geeigneten Bindemittel unter Bedingungen, die eine kovalente Bindung zwischen der gekoppelten funktionellen organischen Verbindung und dem Bindemittel bewirken.

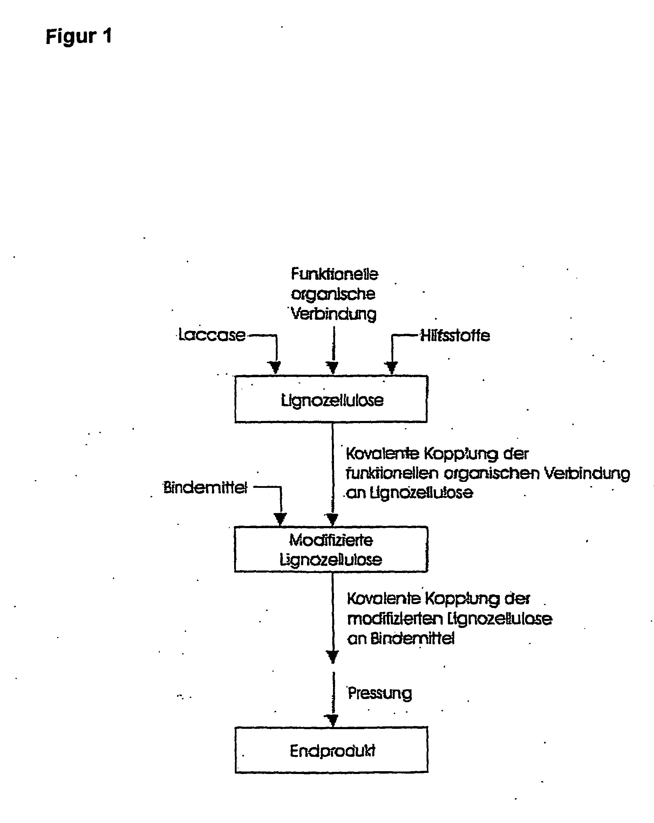

Die Figur 1 zeigt ein Blockbild eines beispielhaften Verfahrensablaufes. Lignozellulose wird mit einem Enzym (hier Laccase), funktionellen organischen Verbindungen und Hilfsstoffen beaufschlagt. Es erfolgt die Modifikation der Lignozellulose durch eine kovalente Kopplung der funktionellen Verbindung an diese. Das zugegebene Bindemittel selbst wird dann im wesentlichen kovalent an die modifizierte Lignozellulose gekoppelt, reagiert dann chemisch oder physikalisch mit sich selbst (hier der Einfachheit halber mit "Pressung" bezeichnet) und verleiht dem entstandenen Endprodukt bestimmte physikalische-chemische Eigenschaften,

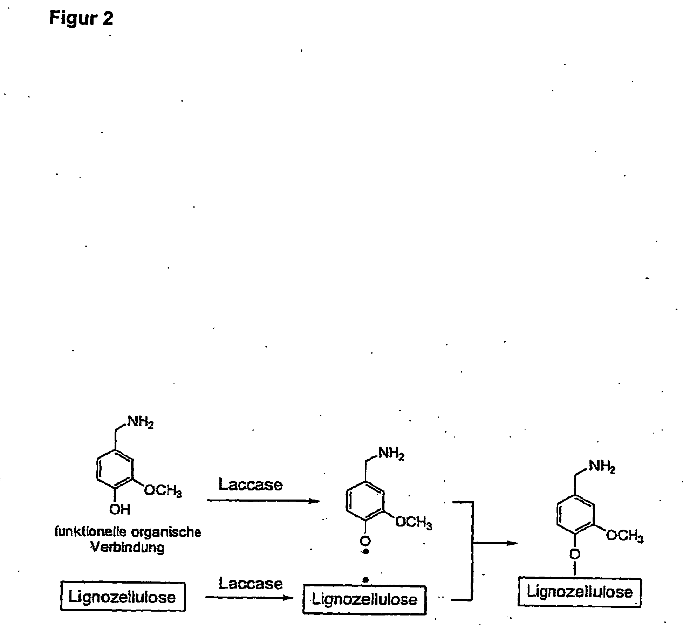

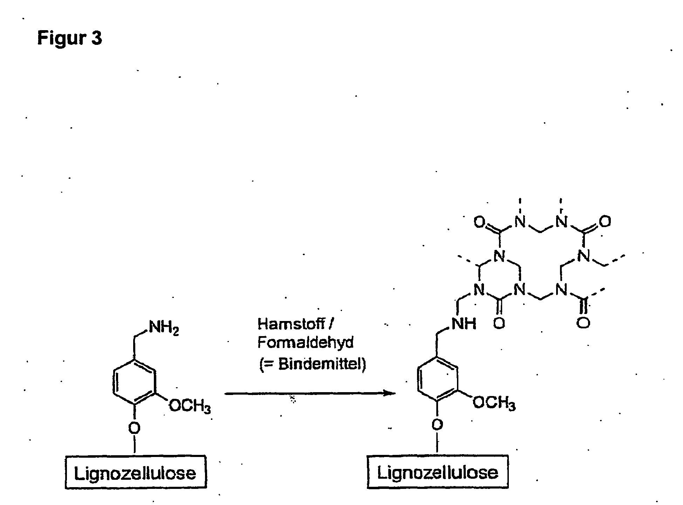

In den Figuren 2 und 3 ist ein erläuterndes, nicht einschränkendes Beispiel für diesen Zweck, beispielsweise für Formaldehydharze, geeignete Verbindung 4-Hydroxy-3-methoxybenzylamin (HMBA) genannt. Ohne sich auf eine estimmte Theorie festzulegen, erfolgt hier die im wesentlichen kovalente Bindung von HMBA als funktionelle organische Verbindung an Lignozellulose durch die oben beschriebene Oxidationsreaktion (siehe Figur 2), gefolgt vom elektrophilen Angriff einer Bindemittelkomponente z.B. Formaldehyd oder vorkondensiertes Formaldehyd) auf die freie Aminogruppe des an Lignozellulose gekoppelten HMBA unter Ausbildung einer kovalenten Bindung, wodurch letztlich eine im wesentlichen kovalente Vernetzung zwischen Lignozellulose und Bindemittel erzielt wird (siehe Figur 3). Weitere Reaktionsschritte, wie z.B. Abspaltung von Wasser, können folgen, um die Bindung weiter zu stabilisieren.

Für die mit dem erfindungsgemäßen Verfahren erzielte im wesentlichen kovalente Kopplung zwischen funktioneller organischer Verbindung und Bindemittel können wie oben definiert funktionelle organische Verbindungen und Bindemittel eingesetzt werden. Die gewählte funktionelle organisch Verbindung ist fahig, mit Hilfe der oben erwähnten Oxidationsmittel und Katalysatoren einerseits an Lignozellulose und andererseits an eine geeignete Komponente des gewählten Bindemittels zu koppeln, so dass eine Vernetzung zwischen Lignozellulose und Bindemittel erzielt wird. Demgemäß kann im speziellen Fall von Formaldehyd/Harnstoff-Harzen auch die Harnstoffkomponente die geeignete Komponente des Bindemittels sein, wenn die gewählte funktionelle organische Verbindung beispielsweise eine geeignete Aldehydgruppe enthält.

In einer der Ausführungsformen der Erfindung bleibt die zur kovalenten Kopplung an das Bindemittel vorgesehene funktionelle Gruppe der funktionellen organischen Verbindung, z.B. die Aminogruppe im Falle von HMBA, im Zuge der oben beschriebenen Oxidationsreaktion vorzugsweise unverändert oder wird nur soweit verändert, dass das gebildete Derivat nach wie vor zur Kopplung an das Bindemittel fähig ist. In einer weiteren Ausführungsform der Erfindung ist diese funktionelle Gruppe so gewählt, dass ihre Kopplung an das Bindemittel erst durch eine solche Derivatisierung ermöglicht wird. Diese Derivatisierung kann direkt mit der Oxidationsreaktion assoziiert sein oder erst unter den Reaktionsbedingungen für das Bindemittel erfolgen.

Die nachstehend erläuterten bevorzugten Komponenten des erfindungsgemäßen Verfahrens gelten für sämtliche Ausführungsformen der Erfindung.

Bei den im erfindungsgemäßen Verfahren eingesetzten lignozellulose-haltigen Materialien kann es sich beispielsweise um Pflanzenfasern, Holzfasern, Hackschnitzel, Flachspäne und/oder Holzfunier handeln.

Im erfindungsgemäßen Verfahrene werden folgende harzhaltige Bindemittel einegesetat: Aminoplaste, Phenoplaste, Vinylacetate, Isocyanate, Epoxidharze und/oder Acrylharze. Besonders bevorzugte harzhaltige Bindemittel sind Harnstoff-Formaldehyd-Harz, Melamin-Formaldehyd-Harz, Phenol-Formaldehyd-Harz, Polyvinylacetat und/oder weissleim.

Das in dem erfindungsgemäßen Verfahren eingesetzte Bindemittel kann ferner einen Härter enthalten. Alternative kann das Härten auch durch Pressen des Verbundmaterials unter Wärmeeinwirkung erfolgen.

Die Menge des im erfindungsgemäßen Verfahren eingesetzten Bindemittels beträgt vorzugsweise 0,01 bis 15 Gew.%, insbesondere 0,1 bis 10 Gew.%, noch bevorzugter 0,5 bis 7,5 Gew.%, bezogen auf das Trockengewicht des eingesetzten lignocellulose-haltigen Materials.

Beispiele für im erfindungsgemäßen Verfahren einsetzbare organische Verbindungen sind aromatische Verbindungen mit 6 bis 20 Kohlenstoffatomen.

Die im erfindungsgemäßen Verfahren einsetzbaren organischen Verbindungen weisen mindestens eine erste und eine zweite funktionelle Gruppe auf. Bei den funktionellen Gruppen handelt es sich-vorzugsweise unabhängig voneinander um eine sauerstoffhaltige, stickstoffhaltige und/oder eine eine Mehrfachbindung enthaltende Gruppe.

So handelt es sich bei der ersten oxidierbaren funktionellen Gruppe um eine Hydroxyl-, insbesondere aromatische Hydroxyl-, Hydroxylamino- Carbonyl-, Amin-, Imin-, Amid-, Nitril-, Isonitril-, Azo-, Alken- oder Alkingruppe.

Die erste oxidierbare Gruppe kann im Zuge einer chemischen Reaktion unter den Reaktionsbedingungen des ersten und/oder zweiten Verfahrensschritts aus einem Vorläufer davon entstehen. Dieser kann aus der Gruppe bestehend aus Hydroxyl-, aromatische Hydroxyl-, Carbonyl-, Amin-, Imin, Nitril-, Isonitril-, Azo-, Alken- und Alkingruppen gewählt sein.

Bei der zweiten funktionellen Gruppe handelt es sich um eine Hydroxyl-, insbesondere aromatische Hydroxyl-Carbonyl-, Carboxyl-, Amin-, Imin-, Amid-, Ureid-, insbesondere N-substituierte Ureid-, Harnstoff-, insbesondere N-substituierte Harnstoff-, Urethan-, insbesondere N-substituierte Urethan-, Nitril-, Isonitril-, Azo-, Alken- oder Alkingruppe.

Die zweite funktionelle Gruppe kann im Zuge einer chemischen Reaktion unter den Reaktionsbedingungen des ersten und/oder zweiten Verfahrensschritts aus einem Vorläufer davon entstehen. Dieser kann aus der Gruppe bestehend aus Hydroxyl-, aromatische Hydroxyl-, Carbonyl-, Carboxyl-, Amin-, Imin-, Amid-, Ureid-, N-substituierte Ureid-, Harnstoff-, N-substituierte Harnstoff-, Urethan-, N-substituierte Urethan-, Nitril-, Isonitril-, Azo-, Alken- und Alkingruppen gewählt, sein.

Erfindungsgemäβ wird als organische Verbindung eine aromatische Verbindung eingesetzt, in der die zweite funktionelle Gruppe durch eine aliphatische Seitenkette vom Aromaten abgekoppelt ist. Weitere Beispiele für im erfindungsgemäßen Verfahren einsetzbare organische Verbindungen sind phenolische Verbindungen und/oder ein aromatische Amine. Eine besonders bevorzugte organische Verbindung ist 4-Hydroxy-3-methoxybenzylamin (HMBA).

Die organische Verbindung wird im erfindungsgemäßen Verfahren vorzugsweise in einer Menge von 0,01 bis 200 Mol%, insbesondere 0,1 bis 100 Mol%, bezogen auf die Menge des eingesetzten Bindemittels, eingesetzt.

Als Oxidationsmittel können im erfindungsgemäßen Verfahren eingesetzt werden. Diese sind imstande, die erste funktionelle Gruppe der organischen Verbindung zu oxidieren. Vorzugsweise erfolgt die Oxidation der ersten funktionellen Gruppe der organischen Verbindung durch enzymatische Oxidation. Geeignete Enzyme sind beispielsweise Oxidasen und Peroxidasen. Sauerstoft und/oder wasserstoftperoxid in Verbindung mit Enzymen als katalysator

Gemäß einer besonders bevorzugten Ausführungsform der Erfindung wird als Oxidationsmittel Sauerstoff eingesetzt. Als Katalysator wird vorzugsweise ein Enzym aus der Gruppe bestehend aus Oxidasen, insbesondere Laccasen (EC 1.10.3.2), Catecholoxidasen (EC 1.10.3.1, 1.10.3.4 und 1.10.3.5), Peroxidasen (insbesondere EC 1.11.1.7, 1.11.1.13 und 1.11.1.14) und Bilirubinoxidasen (EC 1.3.3.5) ausgewählt.

Ein besonders bevorzugtes Enzym ist Laccase. Beim Einsatz von Laccase kann das Reaktionsmedium während der Behandlung gegebenenfalls belüftet werden.

Gemäß einer weiteren bevorzugten Ausführungsform wird als Enzym eine Peroxidase und als Oxidationsmittel Wasserstoffperoxid eingesetzt. Die Anfangskonzentration des Wasserstoffperoxids im Medium beträgt dabei vorzugsweise 0,01 bis 100 mM.

Die Menge des eingesetzten Enzyms beträgt im erfindungsgemäßen Vefahren vorzugsweise 0,01 bis 1000 Enzymeinheiten, insbesondere 0,01 bis 50 Enzymeinheiten pro g trockenem lignocellulose-haltigem Material.

Die Behandlung des lignocellulose-haltigen Materials kann unter beliebigen Bedingungen durchgeführt werden, solange die gewünschte Umsetzung erreicht wird. Erfindungsgemäp weist das Medium in Gegenwart des Oxidationsmittels eine Temperatur von 10 bis 120 °C, insbesondere 15 bis 90 °C, und/oder einen pH von 2 bis 10, insbesondere 4 bis 9, auf. Bei dem Reaktionsmedium kann es sich um ein wäßriges und/oder organisches Lösungsmittel handeln. Vorzugsweise werden als Lösungsmittel ein- und/oder mëhrwertige Alkanole und/oder Ketone, wie z.B. Ethanol, Glykol und/oder Aceton, oder Mischungen hiervon, eingesetzt.

Erfindungsgemäß wird das Reaktionsprodukt aus lignocellulose-haltigem Material und organischer Verbindung, das Verbundmaterial und/oder das auf Lignocellulose basierende Erzeugnis in einem weiteren Verfahrensschritt getrocknet.

Gegenstand der. Erfindung ist schließlich auch ein Erzeugnis auf Basis von Lignocellulose, das durch das erfindungsgemäße Verfahren erhältlich ist.

Nachfolgend wird die Erfindung anhand von Ausführungsbeispielen unter Bezugnahme auf die beigefügten Figuren näher beschrieben. Die Beispiele dienen der Illustration der Erfindung und schränken den Schutzumfang der Erfindung nicht ein. In den Figuren zeigen:
- Fig. 1.-3.: Reaktionsschemata zur Veranschaulichung von bevorzugten Ausführungsformen des erfindungsgemäßen Verfahrens;
- Fig. 4.: Molekulargewichtsanalyse einer Reaktion zur Kopplung von 14C-HMBA an Milled-Wood-Lignin (MWL) mittels Laccase (Reaktion) und der entsprechenden Kontrollreaktion ohne Laccase (Kontrolle);
- Fig. 5.: Ermittlung der Temperatur- und pH-Optima für die Kopplung von 14C-HMBA an Fichtenholzspäne mittels Laccase; und
- Fig. 6.: 15N-NMR-Spektren von mit Laccase und 15N-HMBA behandelten Fichtenholz-Spänen vor (A) und nach (B) der Verleimung mit Harnstoff-Formaldehyd-Harz.

In den Referenzbeispielen 1 bis 3 wird die kovalente Kopplung einer ausgewählten erfindungsgemäßen funktionellen organischen Verbindung an Lignin bzw. Lignozellulose unter Verwendung des Oxidationsmittels Laccase sowie die kovalente Bindung des an Lignozellulose gekoppelten HMBA an ein Bindemittel analytisch nachgewiesen. Die erfindungsgemäßen Beispiele 4 und 5 legen ein beispielhaftes Verfahren zur erfindungsgemäßen Behandlung von Spänematerial dar und zeigen die Vorteile hinsichtlich der Verbesserung der chemisch-physikalischen Eigenschaften anhand ausgeprüfter Laborplatten.

### Beispiel 1 (Referenz)

Radioaktiv markiertes HMBA wurde wie von Kaga et al. (J. Org. Chem. 54, 3477-3478 (1989)) beschrieben unter Verwendung von a-14C-Vanillin (ARC, St. Louis, MO, USA) und Ammoniumformiat synthetisiert. Das Reaktionsprodukt 14C-HMBA wurde mittels DC gereinigt und die radiochemische Reinheit mittels HPLC betrug >95%. Die korrekte chemische Struktur des synthetisierten HMBA wurde mittels 1H- und 13C-NMR bestätigt. Es sollte erwähnt werden, dass die 14C-Markierung lediglich der Erleichterung des quantitativen analytischen Nachweises von HMBA und seinen Reaktionsprodukten dient. Wie dem Fachkundigen auf dem Gebiet der Erfindung bekannt ist, übt die radioaktive Markierung mit 14C keinen wesentlichen Einfluss auf das chemische Reaktionsverhalten einer Verbindung, wie z.B. HMBA aus. 8,0 mg/ml wasserunlösliches Milled-Wood-Lignin (MWL, hergestellt aus Loblolly Pine) wurden mit einem Gemisch aus 0,5 U/ml laccase (siehe Beispiel 4) und 1 mM (27 nCi/ml) 14C-HMBA bei pH 5,0 für 2 Stunden bei 40°C behandelt. Parallel dazu wurde ein Kontrollversuch wie oben beschrieben, jedoch ohne Laccase angesetzt. Nach der Behandlung wurde das Reaktionsgemisch zentrifugiert, die wässrige Phase abgezogen und ein Aliquot davon zur Bestimmung der Molekulargewichtsverteilung über eine Gelfiltrationssäule (Sephadex LH20 in DMF/0,095 M LiCl) fraktioniert. Das MWL-Pellet wurde durch mehrmaliges Aufschlämmen in Wasser und Zentrifugation gewaschen, in DMF (Dimethylformamid) gelöst und ebenfalls wie oben beschrieben mittels Gelfiltration fraktioniert. Die Radioaktivität in den Eluat-Fraktionen der Gelfiltrationen sowie in den vereinigten Waschwässern wurde nach Zugabe eines Szintillators mit einem Flüssigszintillationszähler gemessen.

Die Ergebnisse sind in Tabelle 1 dargestellt. Tabelle 1 zeigt die Massenbilanz für 14C-HMBA. Die Ergebnisse belegen, dass Laccase fähig war, 14C-HMBA an MWL zu binden (50,7% Ausbeute), während ohne Laccase keine signifikante Bindung zu beobachten war (3,2%). Die Wiederfindung betrug in beiden Fällen nahezu 100%.

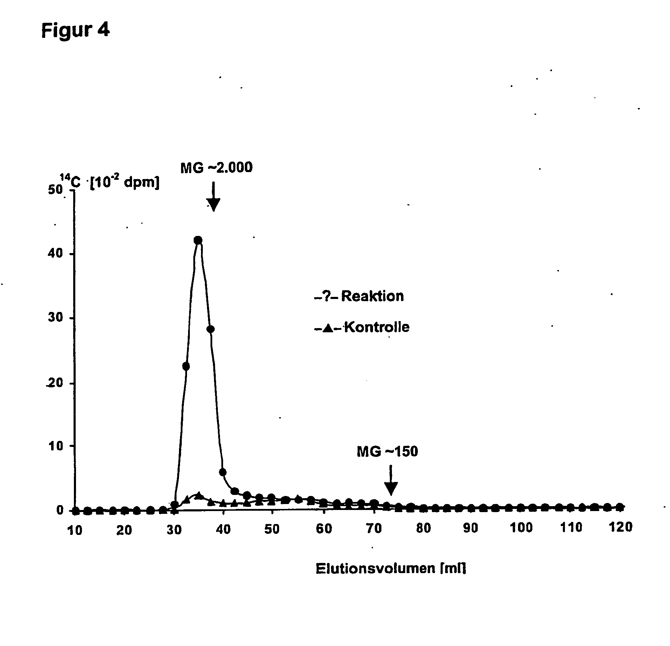

Figur 4 zeigt das entsprechende Gelfiltrationschromatogramm des in DMF gelösten MWL. Die 14C-Molekulargewichtsverteilung deckte sich mit der mittels UV-Absorption bestimmten Molekulargewichtsverteilung des eingesetzten MWL (UV-Chromatogramm nicht dargestellt) mit einem mittleren Molekulargewicht von ungefähr 2.000. Es wurde keine signifikante Radioaktivität in niedermolekularen Fraktionen (z.B. bei einem Molekulargewicht von 150, der ungefähre Position des ungebundenen 14C-HMBA). In der Kontrollreaktion waren nur geringe Radioaktivitätsmengen festzustellen. Das Ergebnis zeigt, dass Laccase eine starke, möglicherweise kovalente Bindung von 14C-HMBA an MWL bewirkte.

Ein weiterer Kontrollversuch, die Reaktion von 14C-HMBA mit Laccase in Abwesenheit von MWL zeigte, da 14C-HMBA von der Laccase zwar umgesetzt wurde, die Reaktionsprodukte jedoch in der wasserlöslich blieben und daher durch Zentrifugation nicht präzipitiert werden konnten. Dies ist ein weitere Beleg dafür, dass im vollständigen Reaktionsgemisch tatsächlich eine kovalente Bindung zwischen 14-HMBA und MWL stattgefunden hat.

### Beispiele 2 (Referenz)

Fichtenholz-Späne (0,2-2 mm) wurden mit 14C-HMBA und Laccase bei pH 5,0 bei 30°C behandelt. Nach der Behandlung wurde die wässrige Phase aus dem Reaktionsgemisch abgezogen und die in einem Aliquot davon enthaltene Radioaktivität mit einem Flüssigszintillationszähler gemessen. Die gebundene Menge an HMBA wurde aus der eingesetzten Radioaktivität abzüglich der nach der Behandlung in der wässrigen Phase verbliebenen Radioaktivität berechnet. Wie in Tabelle 2 dargestellt, betrug die Bindungsausbeute hierin je nach Reaktionsbedingungen 46-96% des eingesetzten HMBA. In Kontrollversuchen ohne Laccase konnte keine signifikante Bindung von 14C-HMBA an Späne festgestellt werden (3%) Die höchste Bindungsausbeute (97%) wurde unter den folgenden Reaktionsbedingungen erhalten: Feuchtegehalt 200% (Verhältnis flüssig/fest = 2:1) bezogen auf Trockenmasse Spänematerial; 0,2 U Laccase und 6 mg HMBA pro Gramm Trockenmasse; pH = 5,0 mittels 5 mM Acetatpuffer; Reaktionszeit 8 Stunden bei 30°C. Im Gegensatz zu.unseren Erwartungen wurde die enzymatische Bindungsreaktion durch hohe HMBA-Konzentrationen bis zu 40 mM in der wässrigen Phase des Reaktionsgemisches nicht gehemmt. Folglich könnte das Verfahren in den Produktionsprozess integriert werden, ohne die Feuchtegehalt der Holzspäne wesentlich zu erhöhen.

Die behandelten Späne aus dem Ansatz mit einer Bindungsausbeute von 97% wurden mehrmals mit Wasser gewaschen um an den Spänen anhaftendes, ungebundenes 14C-HMBA zu entfernen. Im Anschluss daran wurden zwei Extraktionen mit DMF durchgeführt, wodurch insgesamt maximal 5-6% der gebundenen Radioaktivität von den Spänen freigesetzt werden konnten. Dies belegt, dass HMBA sehr stark, höchstwahrscheinlich kovalent an die Späne gebunden wurde.

### Beispiel 3 (Referenz)

Fichtenholz-Späne (0,2 - 2 mm) wurden mit 6 mg 14C-HMBA und 2 U Laccase pro Gramm Späne bei pH-Werten von 3-8 für 2 bis 24 Stunden in Suspension (Verhältnis flüssig/fest = 20:1) behandelt. Während und/oder nach der Behandlung wurde ein Aliquot der wässrigen Phase aus dem Reaktionsgemisch entnommen und die darin enthaltene Radioaktivität mit einem Flüssigszintillationszähler gemessen. Die gebundene Menge an HMBA wurde aus der eingesetzten Radioaktivität abzüglich der nach der Behandlung in der wässrigen Phase verbliebenen Radioaktivität berechnet.

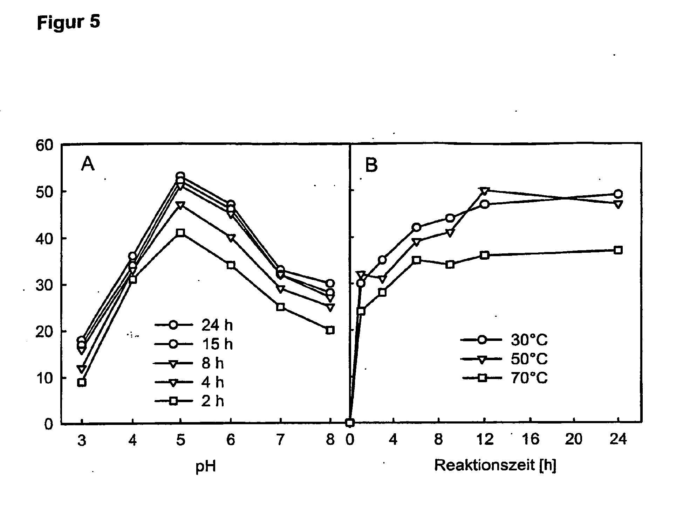

Wie in Figur 5 dargestellt ist, lag der Temperaturbereich für die höchsten Bindungsausbeuten zwischen 30°C und 50°C (Figur 5B) und das pH-Optimum betrug 5,0 (Figur 5A). Jedoch erwies sich die Verwendung eines Puffers als unnötig, da Wasser bei pH 7,0 aufgrund der Azidität von Holz dieselben Ergebnisse lieferte wie Puffer bei pH 5,0.

### Beispiel 4

15N-markiertes HMBA wurde wie in Kaga et al. (J. Org. Chem. 54, 3477-3478 (1989)) beschrieben unter Verwendung von 15N-Ammoniumformiat synthetisiert. 15N-Ammoniumformiat wurde aus 15N-Ammoniak und Ameisensäure hergestellt. Die korrekte chemische Struktur des synthetisierten HMBA wurde mittels 1H- und 13C-NMR bestätigt. Es sollte erwähnt werden, dass die 15N-Markierung lediglich der Erleichterung des analytischen Nachweises von HMBA und seinen Reaktionsprodukten mittels Kernresonanzspektroskopie (NMR) dient. Wie dem Fachkundigen auf dem.Gebiet der Erfindung bekannt ist, übt die Markierung mit 15N keinen wesentlichen Einfluss auf das chemische Reaktionsverhalten einer Verbindung, wie z.B. HMBA aus.

Fichtenholz-Späne (0,2-2 mm) wurden bei einem Feuchtegehalt von 200% bezogen auf Trockenmasse Spänematerial mit 0,2 U Laccase und 6 mg 15N-HMBA pro Gramm Trockenmasse bei pH = 5,0 in 5 mM Acetatpuffer und einer Reaktionszeit von 8 Stunden bei 30°C behandelt. Die behandelten Späne wurden mehrmals mit Wasser gewaschen und dann bei 80°C getrocknet.

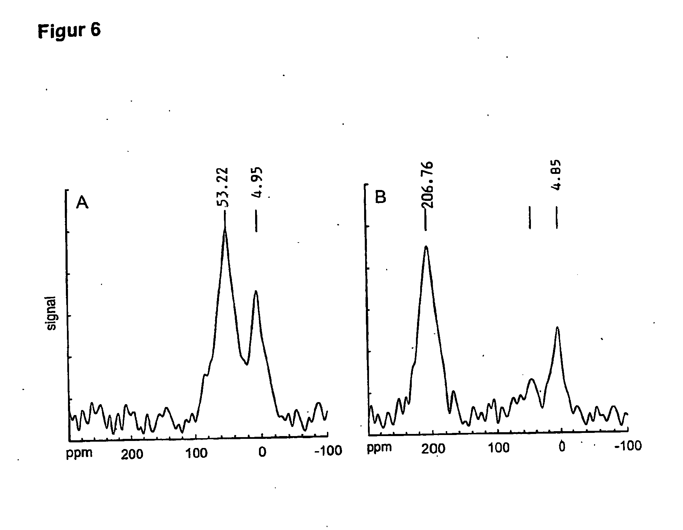

Figur 6A zeigt das 15N-NMR-Spektrum der mit Laccase und 15N-HMBA behandelten Fichtenholz-Späne. Es sind deutliche 15N-Signale bei ca. 208 und ca. 5 ppm zu erkennen, was der chemischen Verschiebung einer freien (R-NH₂) bzw. protonierten (R-NH₃⁺) primären Aminogruppe entspricht. Es konnten keine weiteren 15N-Signale festgestellt werden, womit nachgewiesen ist, dass die Aminogruppe von HMBA im Zuge der Kopplung an die Späne intakt bleibt. Figur 6B zeigt das 15N-NMR-Spektrum von Fichtenholzspänen, die ähnlich wie in Beispiel 1 beschrieben mit Laccase und HMBA behandelt und anschließend auf ähnliche Weise wie in Beispiel 5 beschrieben mit Formaldehyd-Harnstoff-Harz (5% Festharz) verleimt wurden. Im Vergleich zur Figur 6A sind die 15N-Signale bei ca. 208 und ca. 5 ppm signifikant vermindert und es ist ein neues 15N-Signal bei ca. 208 ppm zu erkennen, was der chemischen Verschiebung einer sekundären Aminogruppe (R-NH-R') entspricht, womit nachgewiesen ist, dass das an die Späne gekoppelte HMBA mit dem Harz chemisch, höchstwahrscheinlich unter Ausbildung einer kovalenten Bindung mit der Formaldehydkomponente des Harzes reagiert hat.

### Beispiel 5

Herkömmliches feuchtes Spänematerial, wie es für die Herstellung von Spanplatten für die Mittelschicht verwendet wird, wurde mit einem Laccase-HMBA-Wassergemisch besprüht (100 U Laccase (EC 1.10.3.2) aus *Trametes versicolor* pro Liter Gemisch, wobei 1 U einer Umsatzrate von 1 µmol/min bei pH 5,0 in Bezug auf das Laccase-Standardsubstrat ABTS entspricht; 0,01 Mol HMBA pro Liter Gemisch), sodass sich eine Endfeuchtigkeit des Spanmaterials von 150% bezogen auf die Trockenmasse eingestellt hat. Nach etwa 1 Stunde Reaktionszeit erfolgte eine Trocknung bei etwa 70°C in einem Umlufttrockenschrank auf eine Endfeuchtigkeit von 3% bezogen auf die Trockenmasse. Die Trocknungsdauer betrug etwa 72 Stunden. Im Anschluss daran wurde das trockene Spanmaterial mit einem handelsüblichen Harnstoff-Formaldehyd-Harz der Formaldehydemissionsklasse E1 und entsprechendem handelsüblichem Härter auf AmmoniumNitrat-Basis gemischt. Es wurden zwei Chargen von Platten hergestellt, einerseits mit einem Bindemittelgehalt von 5% Festharz bezogen auf trockene Spänemasse und andererseits von 10%.

Die so behandelten Späne wurden chargenweise zu einem Spänekuchen gestreut und auf einer Laborpresse Platten mit einer Stärke von 14 mm unter Einwirkung von Druck und Tempertaur von etwa 180°C hergestellt. Aus der benötigten Presszeit errechnet sich ein Pressfaktor von 7,8 Sekunden/mm. Die Ergebnisse der mechanisch-chemischen Ausprüfung sind in Tabelle 3 dargestellt.

### Beispiel 6

Als Referenz zu denen im Beispiel 5 genannten Platten wurden welche aus unbehandeltem Spanmaterial hergestellt. Um einen möglichen Einfluss der Spanfeuchte zu kompensieren, wurde das Spanmaterial vor der Trocknung wie oben beschrieben ebenfalls auf eine Feuchtigkeit von 150% gebracht. Aus dem getrockneten Material wurden ebenfalls 2 Chargen von Platten mit einerseits 5% und 10% Bindemittelanteil hergestellt. Aus der benötigten Presszeit errechnet sich ein Pressfaktor von 7,8 Sekunden/mm. Die Ergebnisse der mechanisch-chemischen Ausprüfung sind in Tabelle 3 dargestellt.

**Tabelle 1**

| 14C-Massenbilanzanalyse einer Reaktion zur Kopplung von 14C-HMBA an Milled-Wood-Lignin (MWL) mittels Laccase (Reaktion) und der entsprechenden Kontrollreaktion ohne Laccase (Kontrolle). | | |
|---|---|---|
| | % des eingesetzten 14C-HMBA | |
| | Reaktion | Kontrolle |
| Festphase (MWL) | 50,7 | 3,2 |
| Flüssigphase (Überstand) | 37,4 | 81,4 |
| Reaktionsgefäß | 7,6 | 5,0 |
| Waschungen | 3,3 | 9,0 |
| Gesamt | 99,0 | 98,6 |

**Tabelle 2**

| Kopplung von 14C-HMBA an Fichtenholz-Späne mittels Laccase unter verschiedenen Reaktionsbedingungen bei 30°C und pH 5 in 5 mM Acetatpuffer | | | | |
|---|---|---|---|---|
| Verhältnisflüssig/fest | HMBA (mg/g) | Laccase (U/g) | Reaktionszeit (h) | gebundenes 14C-HMBA (%) |
| 20:1 | 6 | 2 | 2 | 47 |
| 2:1 | 6 | 0,2 | 2 | 55 |
| 2:1 | 6 | 0,2 | 4 | 90 |
| 2:1 | 6 | 0,2 | 8 | 97 |
| 2:1 | 6 | 0 | 8 | 3 |

**Tabelle z3**

| Physikalisch-chemische Eigenschaften der Laborplatten aus den Beispielen 5 und 6 (Mittelwert aus 10 Einzelwerten, außer für Formaldehydgehalt Mittelwert aus 2 Einzelwerten). | | | | | |
|---|---|---|---|---|---|
| | Einheit | Referenz 5% Beispiel 2 | Behandelt 5% Beispiel 1 | Referenz 10% Beispiel 2 | Behandel 10% Beispiel 1 |
| Bindemittelanteil | % | 5 | 10 | 5 | 10 |
| Dicke | mm | 14,1 | 14,2 | 14,2 | 14,1 |
| Dichte | kg/m² | 649 | 654 | 651 | 639 |
| Dickenquellung 2 Stunden | % | 28,2 | 24,5 | 15,3 . | 12,7 |
| Dickenquellung 24 Stunden | % | 32,7 | 27,3 | 18,7 | 14,5 |
| Biegefestigkeit | N/mm² | 7,3 | 10,2 | 9,1 | 12,3 |
| Biege-E-Modul | N/mm² | 970 | 1240 | 1780 | 1990 |
| Querzugfestigkeit | N/mm² | 0,32 | 0,45 | 0,49 | 0,58 |
| Formaldehydgehalt nach EN 120 bezogen auf 6,5% Feuchtigkeit | mg/100g | 3,8 | 3,0 | 5,8 | 5,2 |

## Patentansprüche

1. Verfahren zur Herstellung eines auf Lignocellulose basierenden Erzeugnisses, ausgewählt aus der Gruppe bestehend aus Holzverbundstoffen Holzfaserplatten, Spanplatten, Holzspanplatten, Sperrholz, Oriented Strand Board (OSB) und geformten Verbundwerkstoffen,
aus mindestens
(a) einem lignocellulose-haltigem Material,
(b) einem Bindemittel auf Harzbasis, ausgewählt aus der Gruppe bestehend aus Aminoplasten, Phenoplasten, Vinylacetaten, Isocyanaten, Epoxidharzen und/oder Acrylharzen und
(c) einer organischen Verbindung, welche mindestens eine erste und eine zweite funktionelle Gruppe aufweist,
(c1) wobei die erste funktionelle Gruppe eine oxidierbare funktionelle Gruppe ausgewählt aus der Gruppe bestehend aus Hydroxyl-, Hydroxylamino-, Carbonyl-, Amin-, Imin-, Amid-, Nitril-, Isonitril-, Azo-, Alken- oder Alkingruppen ist und
(c2) wobei die zweite funktionelle Gruppe eine Gruppe ist, welche geeignet ist, unter Ausbildung einer kovalenten Bindung mit dem Bindemittel zu reagieren, und ausgewählt aus der Gruppe bestehend aus Hydroxyl-, Carbonyl-, Carboxyl-, Amin-, Imin-, Amid-, Ureid-, N-substituierten Ureid-, Harnstoff-, N-substituierten Harnstoff-, Urethan-, N-substituierten Urethan-, Nitril-, Isonitril-, Azo-, Alken- oder Alkingruppen ist,
wobei das Verfahren umfasst:
- Behandeln des lignocellulose-haltigen Materials mit der organischen Verbindung in Gegenwart eines Oxidationsmittels, ausgewählt aus der Gruppe bestehend aus Sauerstoff und/oder Wasserstoffperoxid in Gegenwart eines oxidativen Enzyms als Katalysator, in einem wässrigen und/oder organischen Lösungsmittel als Medium wobei das Medium eine Temperatur von 10 bis 120 °C und/oder einen pH von 2 bis 10 aufweist und wobei die erste funktionelle Gruppe der organischen Verbindung oxidiert wird, wodurch zumindest ein Oxidationsprodukt der organischen Verbindung entsteht, das mit dem lignocellulose-haltigen Material eine kovalente Bindung eingeht,
- Behandeln des Reaktionsproduktes aus lignocellulose-haltigem Material und organischer Verbindung mit dem Bindemittel, wobei die Behandlung in einem Medium und unter Reaktionsbedingungen erfolgt, dass die zweite funktionelle Gruppe der organischen Verbindung oder ein im Zuge der Behandlung gebildetes Derivat davon mit dem Bindemittel eine kovalente Bindung eingeht und
- Härten des so hergestellten Verbundmaterials,
wobei als organische Verbindung eine aromatische Verbindung eingesetzt wird, in der die zweite funktionelle Gruppe durch eine aliphatische Seitenkette vom Aromaten abgekoppelt ist.

2. Verfahren nach Anspruch 1, **dadurch gekennzeichnet, dass** das lignocellulose-haltige Material ausgewählt wird aus der Gruppe bestehend aus Pflanzenfasern, Holzfasern, Hackschnitzeln, Flachspänen und Holzfunier.

3. Verfahren nach einem der vorstehenden Ansprüche, **dadurch gekennzeichnet, dass** als harzhaltiges Bindemittel Harnstoff-Formaldehyd-Harz, Melamin-Formaldehyd-Harz, Phenol-Formaldehyd-Harz, Polyvinylacetat und/oder Weißleim eingesetzt wird.

4. Verfahren nach einem der vorstehenden Ansprüche, **dadurch gekennzeichnet, dass** das Bindemittel einen Härter enthält und/oder das Härten durch Pressen des Verbundmaterials unter Wärmeeinwirkung erfolgt.

5. Verfahren nach einem der vorstehenden Ansprüche, **dadurch gekennzeichnet, dass** die Menge des eingesetzten Bindemittels 0,01 bis 15 Gew.%, bezogen auf das Trockengewicht des eingesetzten lignocellulose-haltigen Materials, beträgt.

6. Verfahren nach einem der vorstehenden Ansprüche, **dadurch gekennzeichnet, dass** eine aromatische Verbindung mit 6 bis 20 Kohlenstoffatomen eingesetzt wird.

7. Verfahren nach einem der vorstehenden Ansprüche, **dadurch gekennzeichnet, dass** die funktionellen Gruppen der organischen Verbindung unabhängig voneinander eine sauerstoffhaltige, stickstoffhaltige und/oder eine Mehrfachbindung enthaltende Gruppe ist.

8. Verfahren nach einem der vorstehenden Ansprüche, **dadurch gekennzeichnet, dass** als organische Verbindung eine phenolische Verbindung und/oder ein aromatisches Amin eingesetzt wird.

9. Verfahren nach einem der vorstehenden Ansprüche, **dadurch gekennzeichnet, dass** als Bindemittel ein organischer Harzbildner mit einer Aldehyd-Komponente eingesetzt wird.

10. Verfahren nach Anspruch 9, **dadurch gekennzeichnet, dass** als organischer Harzbildner Harnstoff, Phenole und/oder Melamin, eingesetzt wird.

11. Verfahren nach Anspruch 9, **dadurch gekennzeichnet, dass** als Aldehyd-Komponente Formaldehyd, Benzaldehyd und/oder Furfurylalkohol eingesetzt wird.

12. Verfahren nach einem der vorstehenden Ansprüche, **dadurch gekennzeichnet, dass** als organische Verbindung 4-Hydroxy-3-methoxybenzylamin (HMBA) eingesetzt wird.

13. Verfahren nach einem der vorstehenden Ansprüche, **dadurch gekennzeichnet, dass** die Menge der organischen Verbindung 0,01 bis 200 Mol%, bezogen auf die Menge des eingesetzten Bindemittels, beträgt.

14. Verfahren nach Anspruch 13, **dadurch gekennzeichnet, dass** als Katalysator ein Enzym aus der Gruppe bestehend aus Oxidasen und Peroxidasen ausgewählt wird.

15. Verfahren nach Anspruch 13, **dadurch gekennzeichnet, dass** als Oxidationsmittel Sauerstoff und als Katalysator ein Enzym aus der Gruppe bestehend aus Oxidasen ausgewählt werden.

16. Verfahren nach Anspruch 13, **dadurch gekennzeichnet, dass** als Enzym Laccase eingesetzt wird und das Reaktionsmedium während der Behandlung gegebenenfalls belüftet wird.

17. Verfahren nach Anspruch 13, **dadurch gekennzeichnet, dass** als Enzym eine Peroxidase und als Oxidationsmittel Wasserstoffperoxid eingesetzt werden.

18. Verfahren nach Anspruch 13 oder 17, **dadurch gekennzeichnet, dass** die Anfangskonzentration des Wasserstoffperoxids im Medium 0,01 bis 100 mM beträgt.

19. Verfahren nach einem der Ansprüche 13 bis 18, **dadurch gekennzeichnet, dass** die Menge des eingesetzten Enzyms 0,01 bis 1000 Enzymeinheiten pro g trockenem lignocellulose-haltigem Material beträgt.

20. Verfahren nach einem der vorstehenden Ansprüche, **dadurch gekennzeichnet, dass** bei der Behandlung des lignocellulose-haltigen Materials in Gegenwart des Oxidationsmittels das Medium eine Temperatur von 15 bis 90°C, und/oder einen pH von 4 bis 9, aufweist.

21. Verfahren nach einem der vorstehenden Ansprüche, **dadurch gekennzeichnet, dass** als Reaktionsmedium ein- und/oder mehrwertige Alkanole und/oder Ketone, eingesetzt werden.

22. Verfahren nach einem der vorstehenden Ansprüche, **dadurch gekennzeichnet, dass** das Reaktionsprodukt aus lignocellulose-haltigem Material und organischer Verbindung, das Verbundmaterial und/oder das auf Lignocellulose basierende Erzeugnis in einem weiteren Verfahrensschritt getrocknet wird.

23. Verfahren nach einem der vorstehenden Ansprüche, **dadurch gekennzeichnet, dass** vor der Behandlung des lignocellulose-haltigen Materials im ersten Verfahrensschritt die zweite funktionelle Gruppe der organischen Verbindung in eine Schutzgruppe umgewandelt wird, welche unter den Reaktionsbedingungen des ersten Verfahrensschrittes inert ist, und die Schutzgruppe vor Behandlung mit dem Bindemittel im zweiten Verfahrensschritt wieder in die funktionelle Gruppe umgewandelt wird.

24. Erzeugnis auf Basis von Lignocellulose, das durch ein Verfahren gemäß einem der Ansprüche 1 bis 23 erhältlich ist.

## Claims

1. Method for producing a product based on lignocellulose, selected from the group consisting of wood-based composites, wood-fibre boards, chipboards, wood chipboards, plywood, oriented strand board (OSB) and shaped composite materials,
from at least
(a) one lignocellulose-containing material,
(b) a resin-based binder selected from the group consisting of aminoplasts, phenoplasts, vinyl acetates, isocyanates, epoxy resins and/or acrylic resins, and
(c) an organic compound that comprises at least a first and a second functional group,
(c1) wherein the first functional group is an oxidisable functional group selected from the group consisting of hydroxyl, hydroxylamino, carbonyl, carboxyl, amine, imine, amide, nitrile, isonitrile, azo, alkene or alkyne groups, and
(c2) wherein the second functional group is a group that is suitable for reacting with the binder to form a covalent bond, and is selected from the group consisting of hydroxyl, carbonyl, carboxyl, amine, imine, amide, ureido, N-substituted ureido, urea, N-substituted urea, urethane, N-substituted urethane, nitrile, isonitrile, azo, alkene or alkyne groups,
wherein the method comprises:
- treating the lignocellulose-containing material with the organic compound in the presence of an oxidising agent selected from the group consisting of oxygen and/or hydrogen peroxide in the presence of an oxidative enzyme as catalyst, in an aqueous and/or organic solvent as medium, wherein the medium has a temperature of from 10° to 120°C and/or a pH of from 2 to 10 and wherein the first functional group of the organic compound is oxidised, whereby at least one oxidation product of the organic compound is produced that forms a covalent bond with the lignocellulose-containing material,
- treating the reaction product of lignocellulose-containing material and organic compound with the binder, wherein the treatment takes place in a medium and under reaction conditions such that the second functional group of the organic compound or a derivative thereof formed in the course of the treatment forms a covalent bond with the binder, and
- curing the composite material thereby produced,
wherein as organic compound an aromatic compound is used in which the second functional group is decoupled from the aromatic function by means of an aliphatic side chain.

2. Method according to claim 1, **characterised in that** the lignocellulose-containing material is selected from the group consisting of plant fibres, wood fibres, wood chips, wood flakes and wood veneer.

3. Method according to any one of the preceding claims, **characterised in that** urea-formaldehyde resin, melamine-formaldehyde resin, phenyl-formaldehyde resin, polyvinyl acetate and/or casein glue is used as resin-containing binder.

4. Method according to any one of the preceding claims, **characterised in that** the binder comprises a curing agent and/or the curing is carried out by compressing the composite material under the action of heat.

5. Method according to any one of the preceding claims, **characterised in that** the amount of binder used is 0.01 to 15 wt.% referred to the dry weight of the lignocellulose-containing material used.

6. Method according to any one of the preceding claims, **characterised in that** an aromatic compound with 6 to 20 carbon atoms is used.

7. Method according to any one of the preceding claims, **characterised in that** the functional groups of the organic compound are independently of one another an oxygen-containing group or a nitrogen-containing group and/or a group containing a multiple bond.

8. Method according to any one of the preceding claims, **characterised in that** a phenolic compound and/or an aromatic amine is used as organic compound.

9. Method according to any one of the preceding claims, **characterised in that** an organic resin-forming agent together with an aldehyde component is used as binder.

10. Method according to claim 9, **characterised in that** urea, phenols and/or melamine is used as organic resin-forming agent.

11. Method according to claim 9, **characterised in that** formaldehyde, benzaldehyde and/or furfuryl alcohol is used as aldehyde component.

12. Method according to any one of the preceding claims, **characterised in that** 4-hydroxy-3-methoxybenzylamine (HMBA) is used as organic compound.

13. Method according to any one of the preceding claims, **characterised in that** the amount of the organic compound is 0.01 to 200 mol% referred to the amount of the binder used.

14. Method according to claim 13, **characterised in that** an enzyme from the group consisting of oxidases and peroxidases is selected as catalyst.

15. Method according to claim 13, **characterised in that** oxygen is selected as oxidising agent and an enzyme from the group consisting of oxidases is selected as catalyst.

16. Method according to claim 13, **characterised in that** laccase is used as enzyme and the reaction medium is optionally aerated during the treatment.

17. Method according to claim 13, **characterised in that** a peroxidase is used as enzyme and hydrogen peroxide is used as oxidising agent.

18. Method according to claim 13 or 17, **characterised in that** the initial concentration of hydrogen peroxide in the medium is 0.01 to 100 mM.

19. Method according to any one of claims 13 to 18, **characterised in that** the amount of enzyme used is 0.01 to 1000 enzyme units per g of dry lignocellulose-containing material.

20. Method according to one of the preceding claims, **characterised in that** in the treatment of the lignocellulose-containing material in the presence of the oxidising agent, the medium has a temperature of from 15° to 90°C and/or a pH of from 4 to 9.

21. Method according to any one of the preceding claims, **characterised in that** monohydric and/or polyhydric alkanols and/or ketones are used as reaction medium.

22. Method according to any one of the preceding claims, **characterised in that** the reaction product of lignocellulose-containing material and organic compound, the composite material and/or the product based on lignocellulose is dried in a further process step.

23. Method according to any one of the preceding claims, **characterised in that** before the treatment of the lignocellulose-containing material in a first process step, the second functional group of the organic compound is converted into a protective group that is inert under the reaction conditions of the first process step, and before treatment with the binder in the second process step the protective group is converted back to the functional group.

24. Product based on lignocellulose, which can be obtained by a method according to one of claims 1 to 23.

## Revendications

1. Procédé pour la fabrication d'un produit à base de lignocellulose, choisi dans le groupe consistant en composites de bois, panneaux de fibres de bois, panneaux d'agglomérés, panneaux en bois reconstitué, contre-plaqués, « OSB » (oriented strand board) et matériaux composites façonnés,
ledit produit étant composé d'au moins
(a) un matériau comprenant de la lignocellulose,
(b) un liant à base de résine, choisi dans le groupe consistant en aminoplastes, phénoplastes, acétates vinyliques, isocyanates, résines époxy et / ou résines acryliques, et
(c) un composé organique, qui présente au moins un premier et un deuxième groupe fonctionnel,
(c1) sachant que le premier groupe fonctionnel est un groupe fonctionnel oxydable, choisi dans le groupe consistant en groupes hydroxyle, hydroxylamine, carbonyle, amine, imine, amide, nitrile, isonitrile, azo, alcène, ou alcyne, et
(c2) sachant que le deuxième groupe fonctionnel est un groupe, qui est apte à réagir avec le liant, en formant une liaison covalente, et qui est choisi parmi le groupe consistant en groupes hydroxyles, carbonyles, carboxyles, amines, imines, amides, uréides, uréides N-substitué, urées, urées N-substituée, uréthanes, uréthanes N-substitué, nitriles, isonitriles, azo, alcènes, ou alcynes,
ledit procédé comprenant :
- le traitement du matériau comprenant de la lignocellulose avec le composé organique, en présence d'un agent d'oxydation, choisi dans le groupe consistant en oxygène et / ou le peroxyde d'hydrogène, en présence d'un enzyme oxydatif, en tant que catalyseur, dans un solvant aqueux et / ou organique, en tant que milieu, sachant que le milieu présente une température de 10 à 120 °C et / ou un pH de 2 à 10, et sachant que le premier groupe fonctionnel du composé organique est soumis à une oxydation, ce dont résulte au moins un produit d'oxydation du composé organique, ledit produit formant une liaison covalente avec le matériau comprenant de la lignocellulose,
- le traitement du produit réactionnel à partir du matériau comprenant de la lignocellulose et du composé organique avec le liant, sachant que le traitement est effectué dans un milieu et dans des conditions de réaction tels que le deuxième groupe fonctionnel du composé organique ou un dérivé de celui-ci, formé au cours du traitement, forme une liaison covalente avec le liant, et
- durcissement du matériau composite ainsi fabriqué,
sachant que l'on utilise, comme composé organique, un composé aromatique, dans lequel le deuxième groupe fonctionnel est découplé des composés aromatiques par une chaîne latérale aliphatique.

2. Procédé selon la revendication 1, **caractérisé en ce que** le matériau comprenant de la lignocellulose est choisi dans le groupe consistant en fibres végétales, fibres de bois, bois haché, copeaux plats et contreplaqué en bois.

3. Procédé selon l'une quelconque des revendications précédentes, **caractérisé en ce que**, comme liant comprenant de la résine, on utilise de la résine urée-formaldéhyde, de la résine mélamine-formaldéhyde, de la résine phénol-formaldéhyde, de l'acétate polyvinylique et / ou de la colle de caséine.

4. Procédé selon l'une quelconque des revendications précédentes, **caractérisé en ce que** le liant comprend un durcisseur et / ou que le durcissement est réalisé par compression à chaud du matériau composite.

5. Procédé selon l'une quelconque des revendications précédentes, **caractérisé en ce que** la quantité de liant utilisée est de 0,01 à 15 % en poids par rapport au poids à l'état sec du matériau comprenant de la lignocellulose utilisé.

6. Procédé selon l'une quelconque des revendications précédentes, **caractérisé en ce que** l'on utilise un composé aromatique ayant 6 à 20 atomes de carbone.

7. Procédé selon l'une quelconque des revendications précédentes, **caractérisé en ce que** les groupes fonctionnels du composé organique, indépendamment les uns des autres, sont des groupes comprenant de l'oxygène ou de l'azote et / ou une liaison multiple.

8. Procédé selon l'une quelconque des revendications précédentes, **caractérisé en ce que**, comme composé organique, on utilise un composé phénolique et / ou une amine aromatique.

9. Procédé selon l'une quelconque des revendications précédentes, **caractérisé en ce que**, comme liant, on utilise un agent de résinification organique avec un composant aldéhyde.

10. Procédé selon la revendication 9, **caractérisé en ce que**, comme agent de résinification organique, on utilise de l'urée, du phénol et / ou de la mélamine.

11. Procédé selon la revendication 9, **caractérisé en ce que**, comme composant aldéhyde, on utilise du formaldéhyde, du benzaldéhyde et / ou de l'alcool furfurylique.

12. Procédé selon l'une quelconque des revendications précédentes, **caractérisé en ce que**, comme composé organique, on utilise 4-hydroxy- 3-méthoxybenzylamine (HMBA).

13. Procédé selon l'une quelconque des revendications précédentes, **caractérisé en ce que** la quantité de composé organique est de 0,01 à 200 % mol, par rapport à la quantité du liant utilisé.

14. Procédé selon la revendication 13, **caractérisé en ce que** le catalyseur est un enzyme choisi dans le groupe consistant en oxydases et des peroxydases.

15. Procédé selon la revendication 13, **caractérisé en ce que** l'agent d'oxydation est de l'oxygène et que le catalyseur est un enzyme choisi dans le groupe consistant en oxydases.

16. Procédé selon la revendication 13, **caractérisé en ce que**, comme enzyme, on utilise de la laccase et que, le cas échéant, le milieu de réaction est aéré pendant le traitement.

17. Procédé selon la revendication 13, **caractérisé en ce que**, comme enzyme, on utilise une peroxydase et que, comme agent d'oxydation, on utilise du peroxyde d'hydrogène.

18. Procédé selon la revendication 13 ou 17, **caractérisé en ce que** la concentration initiale de peroxyde d'hydrogène dans le milieu est de 0,01 à 100 mM.

19. Procédé selon l'une quelconque des revendications 13 à 18, **caractérisé en ce que** la quantité de l'enzyme utilisé est de 0,01 à 1000 unités enzymatiques par gramme de matériau sec comprenant de la lignocellulose.

20. Procédé selon l'une quelconque des revendications précédentes, **caractérisé en ce que**, lors du traitement du matériau comprenant de la lignocellulose, en présence de l'agent d'oxydation, le milieu présente une température de 15 à 90 °C et / ou un pH de 4 à 9.

21. Procédé selon l'une quelconque des revendications précédentes, **caractérisé en ce que**, comme milieu de réaction, on utilise des alcanols et / ou des cétones monovalents et /ou polyvalents.

22. Procédé selon l'une quelconque des revendications précédentes, **caractérisé en ce que** le produit réactionnel à partir de matériau comprenant de la lignocellulose et de composé organique, le matériau composite et / ou le produit à base de lignocellulose sont séchés au cours d'une autre étape du procédé.

23. Procédé selon l'une quelconque des revendications précédentes, **caractérisé en ce que**, avant le traitement du matériau comprenant de la lignocellulose au cours de la première étape du procédé, le deuxième groupe fonctionnel du composé organique est transformé en un groupe protecteur inerte dans les conditions de réaction de la première étape du procédé, et **en ce que** le groupe protecteur est de nouveau transformé en groupe fonctionnel, avant le traitement avec le liant au cours de la deuxième étape du procédé.

24. Produit à base de lignocellulose, qui est obtenu par un procédé selon l'une quelconque des revendications 1 à 23.
